Europäisches Patentamt

European Patent Office

Office européen des brevets

(11) Veröffentlichungsnummer: **0 492 191 A1**

(19)

(12) **EUROPÄISCHE PATENTANMELDUNG**

(21) Anmeldenummer: **91120792.6**

(22) Anmeldetag: **04.12.91**

(51) Int. Cl.5: **B60T 11/16**

(30) Priorität: **20.12.90 DE 4040881**
**06.08.91 DE 4126017**

(43) Veröffentlichungstag der Anmeldung:
**01.07.92 Patentblatt 92/27**

(84) Benannte Vertragsstaaten:
**BE DE ES FR GB IT NL**

(71) Anmelder: **Bloecker, Detlef**
**Alter Heeresweg 32**
**W-5350 Koenigswinter 21(DE)**

(72) Erfinder: **Bloecker, Detlef**
**Alter Heeresweg 32**
**W-5350 Koenigswinter 21(DE)**

(74) Vertreter: **Selting, Günther, Dipl.-Ing. et al**
**Patentanwälte von Kreisler, Selting, Werner**
**Deichmannhaus am Hauptbahnhof**
**W-5000 Köln 1(DE)**

(54) **Bremszylinder und Verfahren zu seiner Herstellung.**

(57) Der Bremszylinder wird aus einem Strangpreßprofil hergestellt, indem der benötigte Profilabschnitt
auf Länge abgetrennt und am Ende mit einer Kappe
(19) verschlossen wird. Das Profil besteht aus einem
Zylindermantel (11) mit davon abstehenden Anschlußleisten (13, 14,15). An dem Zylindermantel
(11) wird ein Flanschteil (22) befestigt. Die Bohrungen (26) für die Tankports und Bohrungen (27) für
die Druckanschlüsse werden radial zum Zylindermantel (11) in die Anschlußleisten (13,14, 15) eingebohrt. Durch die Herstellung im Strangpreßverfahren
entsteht ein Zylindermantel, dessen Innenfläche (12)
eine so große Oberflächengüte hat, daß eine Nachbehandlung nicht erforderlich ist.

FIG. 6

EP 0 492 191 A1

Die Erfindung betrifft einen Bremszylinder der im Oberbegriff des Patentanspruchs 1 angegeben Art, und ein Verfahren zu seiner Herstellung.

Hydraulische Bremszylinder, die in sehr großen Stückzahlen in Massenproduktion hergestellt werden, bestehen in der Regel aus Formkörpern, die im Gußverfahren (Grauguß oder Aluminiumguß) erzeugt werden. Solche Bremszylinder haben einen relativ dünnwandigen Zylindermantel, von dem mehrere Tankports und mehrere Druckabgänge abstehen. An den Tankports und den Druckabgängen werden Schlauch- oder Rohrleitungen befestigt. Ferner ist in der Regel ein Flansch vorhanden, um den Hydraulikzylinder an einem Tragteil befestigen zu können, beispielsweise an dem Bremskraftverstärker des Fahrzeugs. Die relativ komplizierte Form des Bremszylinders erfordert aufwendige und teuere Herstellungsverfahren und Gießformen, wobei auch Gießkerne oder Ziehkerne benutzt werden können. Es ist auch bekannt, zunächst einen Grundkörper herzustellen und an diesem dann die Anschlußstutzen durch Schweißen zu befestigen. Auch dies erfordert zahlreiche aufwendige Bearbeitungen, weil jeder Anschlußstutzen einzeln angeschweißt werden muß. Die bekannten Herstellungsverfahren erfordern schließlich in der Regel eine sehr genaue Nachbearbeitung der Innenwand des Zylindermantels, an der sich später der Kolben entlangbewegt, z.B. durch Feinbohren und Ziehschleifen. Diese Feinbearbeitung ist zeitaufwendig und teuer.

Aus DE 21 28 459 C2 ist ein Füllzylinder für einen Füllinjektor für mit Kunststoffpulver oder -granulat zu füllende Formen bekannt, der aus einem durch Stranggießen hergestellten Rohrprofil mit äußeren Längswülsten besteht, in denen längslaufende Kanäle vorhanden sind. Diese Kanäle dienen zum Weiterleiten von Druckluft oder zum Anbringen von Gewindebohrungen zur Befestigung von Anschlußplatten. Einerseits ist die Erzielung einer für Hydraulikzylinder benötigten Genauigkeit bei der Herstellung im Stranggußverfahren wegen der damit verbundenen Materialschwindung nicht möglich und andererseits ist bei Bremszylindern ein Bedarf an durchgehenden längslaufenden Kanälen nicht vorhanden.

Der Erfindung liegt die Aufgabe zugrunde, einen Bremszylinder zu schaffen, der eine kostengünstige und einfache Fertigung mit geringem Aufwand ermöglicht.

Die Lösung dieser Aufgabe erfolgt erfindungsgemäß mit den im Patentanspruch 1 angegebenen Merkmalen.

Der erfindungsgemäße Bremszylinder besteht aus einem Profilstab, der den Zylindermantel und eine längslaufende Anschlußleiste bildet und im Strangpreßverfahren hergestellt ist. Das Strangpreßverfahren bietet den Vorteil, daß es geringe Werkzeugkosten erfordert und daß dennoch der Profilstab so präzise hergestellt werden kann, daß die Innenwand des Zylindermantels eine extrem hohe Oberflächengüte und Maßgenauigkeit hat. Eine spanende Nachbearbeitung der Innenfläche des Zylindermantels ist daher nicht erforderlich. Erforderlichenfalls erfolgt ein Kalibriervorgang, bei dem der Profilstab kalt über einen fliegenden Dorn gezogen wird, um seine Innenfläche mit hoher Oberflächengüte zu glätten.Nach Herstellung des Profilstabes brauchen an diesen nur die Bohrungen für die Druckabgänge und gegebenenfalls für Tankports oder Entlüftungsports in den Anschlußleisten erzeugt zu werden. Eventuell muß noch das Ende des Zylindermantels verschlossen werden. Diese Arbeiten können von Bearbeitungsmaschinen sehr schnell und kostengünstig sowie mit geringem technischen Aufwand durchgeführt werden.

Der Hydraulikzylinder kann auch mit einem Flansch versehen werden, der angeschweißt werden kann. Erforderlichenfalls können die Anschlußleisten auf einem Teil ihrer Länge durch spanabhebende Bearbeitung entfernt werden. Vorzugsweise wird der Hydraulikzylinder aus einer Aluminiumlegierung hergestellt.

Ein wesentlicher Vorteil der Erfindung besteht darin, daß ein einziger Profilstab für mehrere Typen von Hydraulikzylindern verwendet werden kann, wobei z.B. die Länge des Hydraulikzylinders individuell gewählt werden kann und wobei auch die Anordnungen der Ports und Abgänge individuell festgelegt werden können. Es ist daher möglich, eine ganze Serie unterschiedlicher Typen von Hydraulikzylindern basierend auf demselben Stabprofil herzustellen. Demgegenüber ist beim Stand der Technik für jeden Zylindertyp ein eigener Werkzeugsatz erforderlich.

Das Verschließen des Endes des Zylindermantels sowie das Anbringen eventuell erforderlicher weiterer Teile erfolgt zweckmäßigerweise durch Elektronenstrahlschweißung. Elektronenstrahlschweißung hat den Vorteil, daß der Schweißstrahl sehr genau geführt werden kann und daß die Schweißung ohne Fremdmaterialauftrag erfolgt. Ferner lassen sich örtliche Wärmeeinwirkungen durch die kurze Schweißzeit lokal begrenzen, so daß nicht die Gefahr des Verziehens des Werkstücks und unerwünschter Gefügeveränderungen besteht.

Im folgenden werden unter Bezugnahme auf die Zeichnungen Ausführungsbeispiele der Erfindung näher erläutert.

Es zeigen:

Fig. 1     einen im Strangpreßverfahren erzeugten Profilstab,

Fig. 2     eine abgetrennte Länge des Profilstabes als Mittelteil des herzustellenden Zylinders, wobei auch Teile der Anschlußleisten entfernt worden sind,

Fig. 3 einen Längsschnitt durch den Mittelteil gemäß Fig. 2 beim Ansetzen einer Endkappe und eines Flansches,

Fig. 4 einen Längsschnitt nach dem Anbringen von Endkappe und Flansch,

Fig. 5 eine andere Ausführungsform eines Mittelteils, an dem ein Flansch durch Elektronenstrahlschweißen befestigt worden ist,

Fig. 6 eine perspektivische Darstellung des fertigen Hydraulikzylinders,

Fig. 7 eine weitere Ausführungsform eines Profilstabes,

Fig. 8 eine dritte Ausführungsform eines Profilstabes und

Fig. 9 einen Bremszylinder, der als Radbremszylinder verwendbar ist.

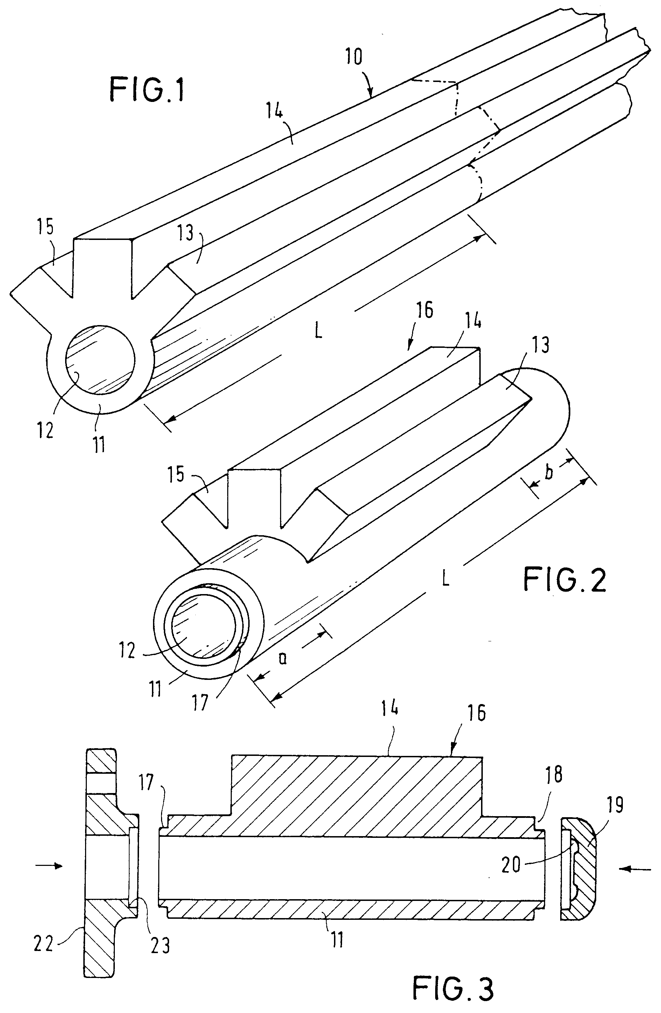

In Fig. 1 ist ein Profilstab 10 dargestellt, der im Strangpreßverfahren aus einer Aluminiumlegierung hergestellt ist und der über seine gesamte Länge konstantes Profil hat. Das Strangpreßwerkzeug ist ein Brückenwerkzeug, bei dem der Dorn zur Herstellung des Längskanals mit radialen Brücken zentriert gehalten wird. Hinter diesen Brücken läuft das Material wieder zusammen und verbindet sich. Bei einem anschließenden Kalibriervorgang wird der Profilstab über einen fliegenden (nicht befestigten) Kalibrierdorn gezogen, um die Innenfläche 12 mit hoher Oberflächengüte zu erzeugen. Der Profilstab 10 besteht aus einem Zylindermantel 11 mit exakt zylindrischer Innenfläche 12 von hoher Oberflächengüte und insgesamt drei radial von dem Zylindermantel 11 abstehenden Anschlußleisten 13,14,15. Die Anschlußleisten haben rechteckigen Querschnitt und ihre Breite ist größer als die Materialstärke des Zylindermantels 11. Bei dem vorliegenden Ausführungsbeispiel sind sämtliche Anschlußleisten 13,14,15 in derselben Hälfte des Umfangs des Zylindermantels 11 angeordnet, d.h. die Anschlußleisten bilden eine etwa W-förmige Konfiguration. In demjenigen Umfangsbereich, in dem keine Anschlußleisten an dem Profilstab vorhanden sind, wird dessen Außenkontur von der Außenfläche des Zylindermantels 11 gebildet.

Von dem Profilstab 10 wird eine Länge L abgeschnitten und anschließend so bearbeitet, daß sich der in Fig. 2 dargestellte Mittelteil 16 ergibt. Die Anschlußleisten sind über eine Länge a am vorderen Ende und über eine Länge b am rückwärtigen Ende des Mittelteils 16 entfernt worden, beispielsweise durch spanabhebendes Abdrehen in einer Drehmaschine, so daß der Profilstab an diesen Enden jeweils zylindrische Außenflächen hat. Ferner sind an den Enden des Mittelteils 16 durch spanabhebende Bearbeitung Stufenabsätze 17 und 18 erzeugt worden.

Gemäß Fig. 3 wird das rückwärtige Ende des Zylindermantels 11 mit einer Kappe 19 verschlossen. Diese runde Kappe hat im Inneren einen Stufenabschnitt 20, der mit dem Stufenabschnitt 18 des Mittelteils 16 zusammenpaßt.

In ähnlicher Weise wird an dem vorderen Ende des Zylindermantels 11 ein Flanschteil 22, das einen zum Stufenabschnitt 17 des Zylindermantels komplementären Stufenabschnitt 23 aufweist, befestigt.

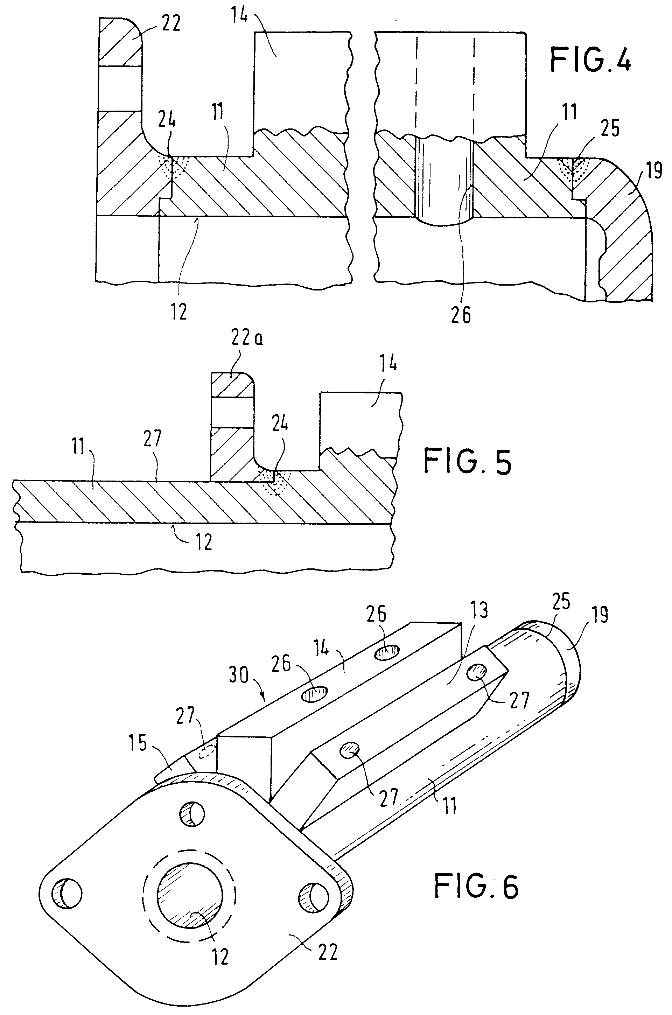

Wie in Fig. 4 dargestellt ist, wird das Flanschteil 22 an dem vorderen Ende des Zylindermantels 11 und die Kappe 19 an dem rückwärtigen Ende des Zylindermantels 11 durch Schweißnähte 24 bzw. 25 befestigt. Das Schweißen erfolgt von außen her, wobei die Schweißwärme die Innenfläche 12 des Zylindermantels 11 nicht erreichen kann. Die ringförmig umlaufenden Schweißnähte 24 und 25 sind durch Elektronenstrahlschweißen im Vakuum erzeugt worden. Das Flanschteil 22 und die Kappe 19 bestehen aus derselben Aluminiumlegierung wie der Profilstab.

Anschließend an die Anbringung des Flanschteils 22 und der Kappe 19 erfolgt das Erzeugen von Bohrungen 26, die sich radial zum Zylindermantel 11 durch die betreffende Anschlußleiste erstrecken. Diese Bohrungen 26 münden in das Innere des Zylindermantels 11 ein.

Während bei dem zuvor beschriebenen Ausführungsbeispiel das Flanschteil 22 vor dem Zylindermantel 11 befestigt worden ist, so daß das Flanschteil die Innenfläche 12 verlängert, ist in Fig. 5 ein Ausführungsbeispiel dargestellt, bei dem das Flanschteil 22a auf eine abgedrehte Außenfläche 27 des Zylindermantels 11 aufgeschoben ist und gegen einen die Abdrehung begrenzenden Anschlag stößt, an welchem dann später die umlaufende Schweißnaht 24 erzeugt wurde. Das Flanschteil 22a befindet sich bei dem fertigen Hydraulikzylinder nicht am vorderen Ende sondern in einem mittleren Abschnitt.

Fig. 6 zeigt den fertigen Hydraulikzylinder 30, dessen Herstellung anhand der Fign. 1 bis 4 beschrieben wurde. Das rückwärtige Ende des Zylindermantels 11 ist durch die Kappe 19 verschlossen, während am vorderen Ende das Flanschteil 22 angebracht ist. Durch die Öffnung des Flanschteils 22 wird der (nicht dargestellte) Kolben in den Zylindermantel eingeführt.

Die am Zylindermantel 11 verbliebenen Teile der Anschlußleisten 13,14,15 haben Bohrungen 26, welche die Tankports bilden. Auf der mittleren Anschlußleiste 14 kann ein Tankbehälter für Bremsflüssigkeit befestigt werden, zum Nachlaufen von Bremsflüssigkeit in den Zylinderraum.

Die Bohrungen 27 in den beiden äußeren Anschlußleisten 13 und 15 bilden Druckabgänge, an welche Schläuche oder Rohrleitungen angeschlossen werden, die zu den einzelnen Bremsen des Fahrzeugs führen. Alle Bohrungen können mit Innengewinde versehen werden, um die entsprechenden Komponenten an den Ports oder Abgängen befestigen zu können.

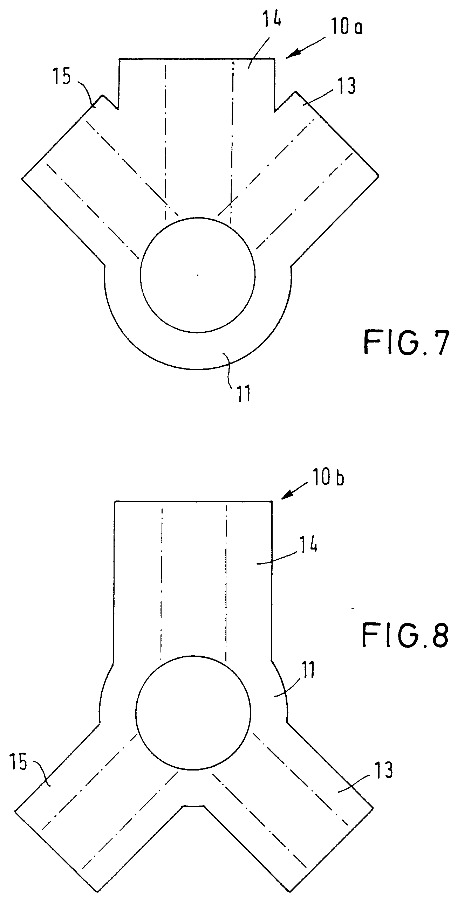

Fig. 7 zeigt eine modifizierte Ausführungsform des Profilstabes 10a. Die Anschlußleisten 13,14,15 liegen hier so nahe beieinander, daß sie ineinander übergehen und gewissermaßen einen längslaufenden einheitlichen Block bilden. Die in den Anschlußleisten später erzeugten Bohrungen können sich - in Frontansicht gesehen - gegenseitig überlappen, da diese Bohrungen in Längsrichtung der Profilleiste gegeneinander versetzt sind.

Ein weiteres Ausführungsbeispiel eines Profilstabes 10b ist in Fig. 8 dargestellt. Die Anschlußleisten 13,14,15 sind hierbei sternförmig um den Zylindermantel 11 herum angeordnet. Man erkennt, daß die Anordnung der Anschlußleisten um den Zylindermantel 11 herum keinen wesentlichen Beschränkungen unterliegt. Während der Zylindermantel 11 relativ dünn ist, stellen die Anschlußleisten die für die Tankports und Druckabgänge erforderlichen Materialstärken und Materialtiefen zur Verfügung.

Für die Hauptbremszylinder von Kraftfahrzeugen benötigt man normalerweise drei Anschlußleisten, wobei jede dieser Anschlußleisten mit zwei Bohrungen versehen wird, entsprechend den beiden Kreisen eines Zweikreis-Bremssystems. Es besteht aber auch die Möglichkeit weniger oder mehr Anschlußleisten vorzusehen.

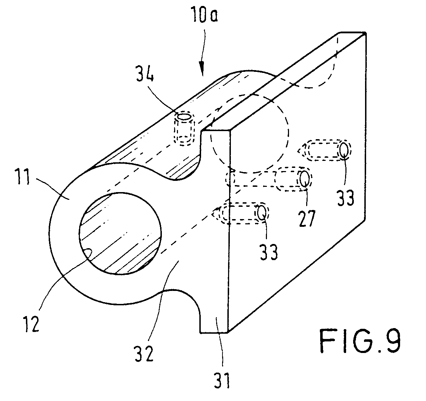

In Fig. 9 ist ein Radbremszylinder dargestellt, wie er beispielsweise in Trommelbremsen Anwendung findet. Dieser Bremszylinder besteht aus einem Zylindermantel 11, der aus einem im Strangpreßverfahren hergestellten und anschließend innen kalibrierten hohlen Profilstab 10a hergestellt ist, welcher auf Länge geschnitten worden ist. Die zylindrische Innenfläche 12 des Profilstabes 10a ist durch die Kalibrierung mit hoher Oberflächengüte versehen worden, so daß eine spätere Nachbearbeitung nicht mehr erfolgt. Der Profilstab 10a hat angrenzend an den Zylindermantel 11 eine Anschlußleiste 31, die als Befestigungsflansch ausgebildet ist, welcher etwa tangential zu dem Zylindermantel 11 verläuft und mit einem Hals 32 in den Zylindermantel übergeht.

Durch die Anschlußleiste 31 erstreckt sich eine Bohrung 27, die im wesentlichen radial in die zylindrische Innenfläche 12 einmündet. Die Bohrung ist mit einem Gewinde versehen, um einen Druckschlauch anschließen zu können. Außerdem sind in der Anschlußleiste 31 parallel zur Bohrung 27 noch weitere Befestigungslöcher 33 vorgesehen, die ebenfalls ein Gewinde haben und dazu dienen, den Bremszylinder an anderen Teilen befestigen zu können.

Die Bohrung 27 befindet sich etwa in der Mitte der Länge des Bremszylinders und in diesem Bereich führt auch eine weitere Bohrung 34 hinein, die als Entlüftungsbohrung vorgesehen ist und ebenfalls mit einem Gewinde zum Anschluß einer Leitung versehen ist.

In den Längskanal des Bremszylinders gemäß Fig. 9 werden von entgegengesetzten Seiten her zwei (nicht dargestellte) Kolben eingesetzt, die von der Mitte des Bremszylinders her mit Druck beaufschlagt werden und die Bremsbacken auseinanderdrücken. Bei einem derartigen Radbremszylinder, der an beiden Enden offen ist, ist ein Tankport nicht erforderlich.

Der Bremszylinder gemäß Fig. 9 wird hergestellt, indem an dem Profilstab 10a lediglich die Bohrungen 27 sowie 33 und 34 angebracht werden. Schweißungen sind dabei überhaupt nicht erforderlich und es erfolgt auch keine Feinbearbeitung der Innenfläche 12 des beim Strangpressen des Profilstabes erzeugten Zylinderkanals.

**Patentansprüche**

1. Bremszylinder mit einem Zylindermantel (11) und mindestens einem quer in den Zylindermantel hineinführenden Druckanschluß, **dadurch gekennzeichnet,** daß der Druckanschluß sich an einer längslaufenden Anschlußleiste (13,14,15) befindet, die einstückig mit dem Zylindermantel geformt ist.

2. Bremszylinder nach Anspruch 1, gekennzeichnet durch seine Verwendung als Hauptbremszylinder eines Fahrzeugs.

3. Bremszylinder nach Anspruch 1, gekennzeichnet durch seine Verwendung als Radbremszylinder eines Fahrzeugs.

4. Verfahren zur Herstellung eines Hydraulikzylinders nach einem der Ansprüche 1-3, der einen einseitig geschlossenen Zylindermantel (11) sowie mindestens einen Druckanschluß aufweist, **dadurch gekennzeichnet,** daß ein Profilstab (10) aus dem Zylindermantel (11) und mindestens einer durchgehend verlaufenden Anschlußleiste (13,14,15) im Strangpreßverfahren hergestellt und an seiner Innenfläche (12) durch Kalibrieren bearbeitet wird, daß danach der Profilstab auf Länge geschnitten wird und daß durch die Anschlußleiste mindestens eine Querbohrung (27) für den Druckanschluß in das Innere des Zylindermantels (11) gebohrt wird.

5. Verfahren nach Anspruch 4, dadurch gekennzeichnet, daß ein Ende des Zylindermantels (11) verschlossen wird.

6.  Verfahren nach Anspruch 4 oder 5, dadurch gekennzeichnet, daß mindestens ein Teil der Länge einer Anschlußleiste (13,14,15) abgetragen wird.

7.  Verfahren nach einem der Ansprüche 4-6, dadurch gekennzeichnet, daß an dem Zylindermantel (11) ein Flanschteil (22) befestigt wird.

8.  Verfahren nach einem der Ansprüche 4-7, dadurch gekennzeichnet, daß das Verschließen des Endes des Zylindermantels (11) durch Anbringen einer Kappe (19) erfolgt, die durch Elektronenstrahlschweißung befestigt wird.

9.  Verfahren nach Anspruch 4, dadurch gekennzeichnet, daß die Anschlußleiste (31) als Befestigungsflansch mit Befestigungslöchern (33) ausgebildet ist.

FIG.1

FIG.2

FIG.3

FIG.4

FIG.5

FIG.6

FIG.7

FIG.8

10a

34

11

12

32

31

27

33

33

FIG.9

Europäisches Patentamt

**EUROPÄISCHER RECHERCHENBERICHT**

Nummer der Anmeldung

EP    91 12 0792

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | GB-A-2 123 103 (ALFRED TEVES GMBH) <br> * das ganze Dokument * <br> --- | 1,2 | B60T11/16 |
| Y,D | DE-A-2 128 459 (HEINRICH NYMPHIUS KG) <br> * das ganze Dokument * <br> --- | 4 | |
| Y | US-A-4 679 994 (GEORGE E. BROWN) <br> * Spalte 2, Zeile 29 - Spalte 4, Zeile 1; <br> Abbildungen 1-3 * | 4 | |
| A | --- | 9 | |
| A | DE-A-3 416 878 (WEBASTO-WERK) <br> * Seite 15, Zeile 7 - Seite 16, Zeile 9; <br> Abbildungen 1-3 * <br> --- | 8 | |
| A | PATENT ABSTRACTS OF JAPAN <br> vol. 4, no. 45 (M-006)31. Januar 1980 <br> & JP-A-55 014 350 ( MATSUSHITA ELECTRIC WORKS <br> LTD ) <br> * Zusammenfassung * <br> ----- | 4 | |
| | | | **RECHERCHIERTE SACHGEBIETE (Int. Cl.5 )** <br><br> B60T |

Der vorliegende Recherchenbericht wurde für alle Patentansprüche erstellt

| Recherchenort | Abschlußdatum der Recherche | Prüfer |
|---|---|---|
| DEN HAAG | 08 APRIL 1992 | HARTEVELD C.D.H. |

**KATEGORIE DER GENANNTEN DOKUMENTE**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..........................................................................
& : Mitglied der gleichen Patentfamilie, übereinstimmendes
    Dokument

EPO FORM 1503 03.82 (P0403)